# EUROPÄISCHE PATENTSCHRIFT

(11) **EP 1 229 261 B1**
(45) Veröffentlichungstag und Bekanntmachung des Hinweises auf die Patenterteilung: **29.03.2006**
(21) Anmeldenummer: 01126588.1
(22) Anmeldetag: 15.11.2001
(51) Int. Cl.: F16C 39/06

(54) **Vorrichtung zur Lageregelung eines berührungslos gelagerten, schnelldrehenden Rotors**
Control positioning device of a high speed contactless rotor
Dispositif de commande de positionnement d'un rotor à grande vitesse ,sans contact

(30) Priorität: 01.02.2001 DE 10104419
(43) Veröffentlichungstag der Anmeldung: 07.08.2002
(73) Patentinhaber: Saurer GmbH & Co. KG, 41069 Mönchengladbach (DE)
(72) Erfinder: Coenen, Norbert, 41199 Mönchengladbach (DE)
(74) Vertreter: Hamann, Arndt

(56) Entgegenhaltungen:
- DE-A- 2 658 668
- DE-A- 3 148 944
- FR-A- 2 480 959
- FR-A- 2 706 549
- US-A- 3 253 228
- US-A- 5 748 005

## Beschreibung

Die Erfindung betrifft eine Vorrichtung zur radialen Lageregelung eines berührungslos gelagerten schnelldrehenden Rotors, insbesondere eines Spinnrotors, nach dem Oberbegriff des Anspruchs 1.

Berührungslose passive Lagerungen oder berührungslose aktive Lagerungen mit Regeleinrichtungen zur Lagestabilisierung beziehungsweise zur Schwingungsdämpfung sind in einer Vielzahl von Ausführungen bekannt.

Die DE 33 23 648 Al zeigt zum Beispiel eine Magnetlagerung, die eine Aktorik mit elektromagnetischen Spulen umfaßt. Die Magnetlagerung weist zwei in Richtung der Drehachse eines Rotors zueinander versetzte Lagerteile auf. Für zwei zur Drehachse des Rotors und zueinander senkrechte Richtungen sollen die translatorischen Abweichungen der augenblicklichen Lage der Drehachse von der Soll-Lage ermittelt und durch Steuerung von Magnetkräften ausgeregelt werden. Außerdem werden Kippbewegungen des Rotors um zu den beiden zur Drehachse senkrechten Richtungen parallele Drehachsen ermittelt und ein Rückstellmoment um diese Achsen erzeugt, wobei zusätzlich Schaltmittel zur Dämpfung der Nutationsfrequenz vorgesehen sind. Die Nutation des Rotors wird dabei mittels Kreuzkopplungszweigen gedämpft. Da alle Lageabweichungen ausgeregelt werden, wird bei hohen Drehzahlen des Rotors ständig nachgeregelt und die Aktorik hoch ausgesteuert. Dies ist im Hinblick auf den Energieverbrauch und die Belastung der Regelelemente nachteilig und verursacht Begrenzungserscheinungen in der Ansteuerung der Aktorik, zum Beispiel bei den Verstärkern. Insbesondere der sogenannte D-Anteil in Regeleinrichtungen (zum Beispiel bei PD-Reglern) führt bei hohen Frequenzen beziehungsweise bei hohen Drehzahlen zu einer Amplitudenanhebung und damit zu hohen Amplitudenwerten der Steuerspannung. Dadurch ist der Leistungsbedarf einer derartigen Regelung hoch. Beim Hochfahren der Drehzahl des Rotors wird beispielsweise während des nur Sekundenbruchteile andauernden Durchlaufes der Drehzahl durch eine Resonanzfrequenz des Lagerungssystems eine erhöhte Leistung nur kurzfristig benötigt. Bei den hohen Betriebsdrehzahlen schnelldrehender Rotoren, wie zum Beispiel bei Spinnrotoren, ist bei derartigen Lageregelungen die hohe Leistung dauernd erforderlich.

Um eine gewisse Laufruhe zu erzielen und mit geringerer Leistung arbeiten zu können, ist es bekannt, den Rotor nicht um seine geometrische, sondern um seine Schwerpunktsbeziehungsweise Trägheitsachse drehen zu lassen. Die DE 26 58 668 A1 offenbart beispielsweise eine magnetische Lagerung für einen Rotor, bei der die insbesondere von Unwuchten herrührenden und von der Drehzahl des Rotors abhängigen Störeinflüsse mittels eines Sperrfilters vermindert sind. Der Regelkreis des Magnetlagers weist hierzu eine zwischen die Sensoreinrichtung und den Steuerkreis geschaltete Filtereinrichtung für die von der Sensoreinrichtung gelieferten Signale auf. Die Filtereinrichtung ist als hinsichtlich seiner Frequenz auf die Drehgeschwindigkeit des Rotors eingestelltes Sperrfilter ausgebildet. Das Sperrfilter filtert periodisch mit der Drehfrequenz auftretende Störungen der Rotorlage, die ein ständiges Nachregeln des Rotors in die Mittellage bewirken würden, aus. Dazu werden Addierschaltungen und eine Gegenkopplungsschaltung verwendet. Für die beschriebene Schaltung ist jedoch ein großer Aufwand nötig, was zu einer relativ großen Störanfälligkeit der gesamten Schaltung führt. Derartige Filterschaltungen verursachen zudem erhebliche, allgemein als nachteilig bekannte Phasendrehungen beziehungsweise Phasenfehler, die mehr als 90° betragen können, die die Stabilität des Regelkreises gefährden können oder ihrerseits wieder aufwendig kompensiert werden müssen. Durch die vorgenommene Einstellung der Wirkung des Sperrfilters auf eine bestimmte Drehgeschwindigkeit des Rotors tritt bei von dieser Einstellung abweichenden Drehfrequenzen die erwünschte Wirkung nicht ein.

Die gattungsbildende DE 31 20 691 Al beschreibt ein Magnetlager, bei dem Abweichungen von der Geometrie des Rotors von einer Sensoreinrichtung erfaßt und in einem Datenspeicher unter Zuordnung zum jeweiligen Stellungswinkel bei der Drehbewegung des Rotors abgespeichert werden. Die Erfassung geschieht rotorspezifisch und wird vor der Inbetriebnahme des jeweiligen Rotors vorgenommen. Die gespeicherten Werte bleiben über die gesamte Betriebsdauer des Rotors erhalten. Mittels eines Korrektursignals werden die auf Geometriefehler zurückzuführenden, von der Sensoreinrichtung erzeugten Störsignale jeweils überlagert und damit kompensiert. Der Einsatz einer derartigen Vorrichtung, insbesondere an Spinnrotoren einer Rotorspinnmaschine, ist mit Nachteilen behaftet. Spinnrotoren sind Verschleiß unterworfen, der einen Austausch des jeweiligen Spinnrotors erzwingen kann. Gegebenenfalls werden Spinnrotoren auch bei Partiewechsel fasermaterial- beziehungsweise garnabhängig ausgetauscht. Der beim Einsatz von Spinnrotoren unvermeidliche wiederholte Spinnrotoraustausch erfordert somit- erheblichen Aufwand durch erneute Erfassungsvorgänge. Zur Speicherung der Datenmengen und deren laufender Verarbeitung muß ständig Rechnerkapazität größeren Ausmaßes zur Verfügung stehen. Jede Unwucht, die nicht auf erfaßbare Geometriefehler zurückzuführen ist, zum Beispiel eine Unwucht infolge von Inhomogenität des Rotormaterials oder eine Unwucht infolge von anhaftendem Trash, der sich im Bereich der Rotorrille von Spinnrotoren ansammeln kann, wird mit der in der DE 31 20 691 A1 beschriebenen Vorrichtung nicht kompensiert.

Es ist Aufgabe der Erfindung, die Lageregelung von berührungslos gelagerten Rotoren zu verbessern.

Diese Aufgabe wird erfindungsgemäß durch eine vorrichtung mit den Merkmalen des Anspruchs 1 gelöst.

Vorteilhafte Ausgestaltungen der Erfindung sind Gegenstand der Unteransprüche.

Eine erfindungsgemäße Steuereinrichtung mit den kennzeichnenden Merkmalen des Anspruchs 1 erlaubt beim Auftreten von höheren Schwingungsfrequenzen die Absenkung der Schwingungsamplituden der drehfrequenzabhängigen Schwingung bei gleichzeitig kleinen Phasenfehlern bezüglich der verhältnismäßig niedrigen Resonanzfrequenzen und damit einhergehend eine vorteilhafte Minderung der Leistungsaufnahme der Lageregelung sowie eine erhöhte Laufruhe des Rotors ohne übliche Sperrfilter und ohne oben erwähnte Nachteile des Standes der Technik. Die dabei auftretenden kleinen Phasenfehler gefährden die Stabilität der Regelung nicht und sind tolerierbar. Dagegen ist die Phasendrehung, die durch übliche Tiefpassfilter hervorgerufen werden kann, wesentlich größer.

Bevorzugt wird die Reduzierung der Amplitude der drehfrequenzabhängigen Schwingung des weiteren Signals gegenüber der Amplitude der drehfrequenzabhängigen Schwingung des Reglerausgangssignals dadurch bewirkt, daß außerhalb der Bereiche, in denen das weitere Signal dem Kurvenverlauf des Reglerausgangssignals folgt, die Steigung der Kurve des weiteren Signals auf einen maximalen Betrag begrenzt wird. Der hier verwendete Begriff "folgen" umfaßt auch den Fall, daß zwischen dem weiteren Signal und dem Kurvenverlauf des Reglerausgangssignal eine nur geringe Differenz besteht. Die Begrenzung der Steigung gilt nicht nur für den Bereich, in dem die Steigung des Reglerausgangssignals positiv ist. Ist die Steigung der Schwingung des Reglerausgangssignals negativ, d.h. fällt die Kurve ab, ist die Steigung der Kurve beziehungsweise das Gefälle des weiteren Signals ebenfalls auf den maximalen Betrag begrenzt. Der maximale Betrag kann somit auch als Absolutbetrag angesehen werden. Solange die Steigung des Reglerausgangssignals unterhalb der Begrenzung liegt, folgt das weitere Signal stets dem Reglerausgangssignal und.die Regelung entspricht voll dem Regelalgorithmus. Dagegen setzt bei höherfrequenten drehfrequenzabhängigen Schwingungen des Reglerausgangssignals, bei denen die Kurve des Reglerausgangssignals jeweils steil ansteigt oder steil abfällt und die Steigung die Begrenzung übersteigt, eine erfindungsgemäße Amplitudenabsenkung bei den drehfrequenzabhängigen Schwingungen des weiteren Signals, das zur Generierung des Aktorsteuersignals für die Aktoreinrichtung herangezogen wird, ein. Als Signalgröße beziehungsweise als Stellgröße kann beispielsweise die Größe einer Spannung oder eines Stromes benutzt werden. Die deutliche Reduzierung von Signalanteilen mit hoher Frequenz und hoher Amplitude, wie zum Beispiel der drehfrequenzabhängigen Schwingungsanteile des Reglerausgangssignals, beim weiteren Signal eröffnet die Möglichkeit einer erweiterten Aussteuerbarkeit niederfrequenter Störeinflüsse wie zum Beispiel der Nutation eines Rotors, ohne eine Überlastung, zum Beispiel von Aktorelementen, befürchten zu müssen. Der bei der erfindungsgemäßen Amplitudenabsenkung der drehfrequenzabhängigen Schwingungsanteile entstehende Amplituden- und Phasenfehler bleibt so gering beziehungsweise nahe Null, daß keine Instabilität der Regelung auftreten kann. Sowohl das Vermeiden einer Überlastung wie auch die vorliegende Stabilität der Regelung dienen einer erhöhten Betriebssicherheit. Die erfindungsgemäße Vorrichtung ist im Hinblick auf Rotordrehzahlen flexibel einsetzbar und unterliegt insofern keiner Beschränkung, als das Vorliegen beziehungsweise das Einhalten einer vorbestimmten Drehzahl nicht notwendig ist.

Die vorteilhafte Wirkung der Erfindung läßt sich bereits auf relativ einfache Weise und mit geringem Aufwand erreichen, wenn der Abschnitt, in dem die Begrenzung der Steigung der Kurve des weiteren Signals auf einen maximalen Betrag wirksam ist, beim Extremwert beginnt und dann endet, wenn der Wert des Reglerausgangssignals den momentanen Wert des weiteren Signals wieder erreicht.

In einer vorteilhaften Ausbildung ist die Steuereinrichtung so eingerichtet, daß die Breite des jeweiligen Bereiches, in dem das weitere Signal dem Kurvenverlauf des Reglerausgangssignals folgt, drehfrequenzabhängig bestimmt wird und außerhalb dieser Bereiche die Steigung der Kurve des weiteren Signals vorzugsweise Null ist.

Bei relativ niederfrequenten Schwingungen, zum Beispiel bei Lagerresonanzfrequenzen, erstreckt sich der Bereich, in dem das weitere Signal dem Kurvenverlauf des Reglerausgangssignals folgt, über den gesamten Phasenverlauf. Bei Frequenzen soweit oberhalb der Lagerresonanzfrequenzen, daß deren Dämpfung nicht beeinträchtigt werden kann, hat auch der andere Bereich, in dem sich die Begrenzung der Steigung auswirkt und die Steigung damit in diesem anderen Bereich konstant ist, einen Anteil am Phasenverlauf des weiteren Signals. Der Anteil des anderen Bereiches wird mit steigender Drehfrequenz in dem Maße vergrößert, in dem der Anteil des ersten Bereiches sinkt. Dadurch, daß das weitere Signal periodisch wiederkehrend mindestens in einem Bereich noch dem Reglerausgangssignal folgt, bleibt das weitere Signal phasenstarr zur jeweiligen Drehfrequenz. Die Phase wird synchronisiert und ein Abdriften vermieden.

Die Bestimmung der Breite und der Lage des jeweiligen ersten Bereiches, in dem das weitere Signal dem Kurvenverlauf des Reglerausgangssignals folgt, und des anderen Bereiches, in dem sich die Begrenzung der Steigung auswirkt, ist mittels eines Prozessors möglich. Der gleiche Effekt kann bei geringem Aufwand ohne das Erfordernis der Bereitstellung von Rechenkapazität mittels einer geeigneten Schaltung erreicht werden.

Mit einem der Steuereinrichtung nachgeschalteten Kondensator kann auf einfache Weise der Gleichstromanteil des Signals abgekoppelt werden. Der Durchlaß der Nutationsfrequenz erfolgt ohne nennenswerten Phasenfehler beziehungsweise ohne nennenswerte Phasenverschiebung. Die Nutation des Rotors, insbesondere eines Spinnrotors, kann somit wirkungsvoll gedämpft werden.

Bevorzugt ist die Steuereinrichtung so eingerichtet, daß die Drehfrequenz, bei der der Kurvenverlauf des weiteren Signals dem Kurvenverlauf des Reglerausgangssignals nur im Bereich eines der beiden Extremwerte folgt, mindestens doppelt so hoch ist wie die maßgebende Resonanzfrequenz der berührungslosen Lagerung. Hohe Drehzahlfrequenzen beziehungsweise Schwingungsfrequenzen treten beispielsweise auf, wenn der Rotor ein Spinnrotor ist, der bei Betriebsdrehzahl umläuft. Zu dämpfende niederfrequente Resonanzschwingungen des berührungslos arbeitenden Lagersystems bleiben praktisch unverfälscht erhalten und diese Schwingungen können mittels des als Stellgröße verwendeten Signals wirkungsvoll ausgeregelt beziehungsweise gedämpft werden.

Vorzugsweise ist die Steuereinrichtung zur Bildung eines neuen Signals als arithmetischer Mittelwert zweier weiterer Signale eingerichtet, wobei dem Kurvenverlauf des Reglerausgangssignals ein weiteres Signal jeweils nur im Bereich eines der beiden Extremwerte und das andere weitere Signal nur im Bereich der jeweils anderen Extremwerte folgt, und das als arithmetischer Mittelwert gebildete neue Signal vorteilhaft als Aktorsteuersignal zur Ausgabe an die Aktoreinrichtung gelangt. Auf diese Weise läßt sich eine verbesserte Glättung des als Stellgröße verwendeten Signals erzielen, die zu einer weiteren Absenkung des Leistungsbedarfs der Rotorlageregelung führt.

Ein quasisymmetrischer Schaltungsaufbau mit den Merkmalen des Anspruchs 8, 9 oder 10 erfordert keinen hohen Bau- und Kostenaufwand sowie keine Belegung von Rechnerkapazitäten. A-D-Wandler oder D-A-Wandler sind bei Anwendung dieser Schaltung nicht erforderlich, da die Signalverarbeitung vollständig analog erfolgen kann. Der Umfang des Bereiches, in dem das weitere Signal dem Reglerausgangssignal folgt, generiert sich selbsttätig abhängig von der Drehfrequenz.

Eine Ausbildung von in der Schaltung eingesetzten Widerständen gemäß Anspruch 11 verbessert die amplitudenabsenkende Wirkung der erfindungsgemäßen Vorrichtung.

Ist die berührungslose Lagerung eine aktive Magnetlagerung, können vorhandene Aktorelemente verwendet werden.

Die durch die Absenkung der Amplituden hervorgerufene Wirkung entspricht einer sogenannten Unwuchtunterdrückung. Dreht der Rotor auf seiner Trägheits- beziehungsweise Schwerpunktachse, erfolgt keine ständige Nachregelung mit hoher Aussteuerung der Aktorelemente. Die erforderliche Leistung für die Lageregelung ist relativ gering. Die erfindungsgemäße Vorrichtung stellt ein einfaches, sehr kostengünstiges und Energie sparendes, dabei aber sehr wirkungsvolles Mittel zur Lageregelung beziehungsweise zur aktiven Dämpfung beim Durchfahren der Lagerresonanzfrequenzen und vornehmlich bei der Nutation von berührungslos gelagerten Rotoren dar. Mit der erfindungsgemäßen Vorrichtung läßt sich neben dem geringen Energieverbrauch eine erweiterte Aussteuerbarkeit und eine höhere Betriebssicherheit bei radialen Lageregelungen eines berührungslos gelagerten schnelldrehenden Rotors, insbesondere eines Spinnrotors, erreichen.

Weitere Einzelheiten der Erfindung werden anhand der Darstellung der Figuren erläutert.

Es zeigt:
- Fig. 1: die Prinzipdarstellung einer Magnetlagerung eines Spinnrotors,
- Fig. 2: eine Schaltung zur erfindungsgemäßen Begrenzung der Steigung eines weiteren Signals,
- Fig. 3 und 4: den vereinfacht dargestellten Verlauf der an jeweils einem Kondensator der Schaltung der Figur 2 anliegenden Spannung,
- Fig. 5: einen Abschnitt eines graphisch dargestellten Schwingungsverlaufes sowie die Darstellung von daraus resultierenden Signalen,
- Fig. 6: die Darstellung eines Schwingungsverlaufes, der die Lage eines mit hoher Drehzahl umlaufenden Spinnrotors repräsentiert,
- Fig. 7: Signale in vereinfachter Darstellung, die aus dem in Fig. 6 dargestellten Schwingungsverlauf resultieren,
- Fig. 8: ein weiteres Signal, dessen Steigung bereichsweise Null ist,
- Fig. 9 und 10: eine Prinzipdarstellung einer erfindungsgemäßen Steuereinrichtung mit nachgeordneten Kondensatoren.

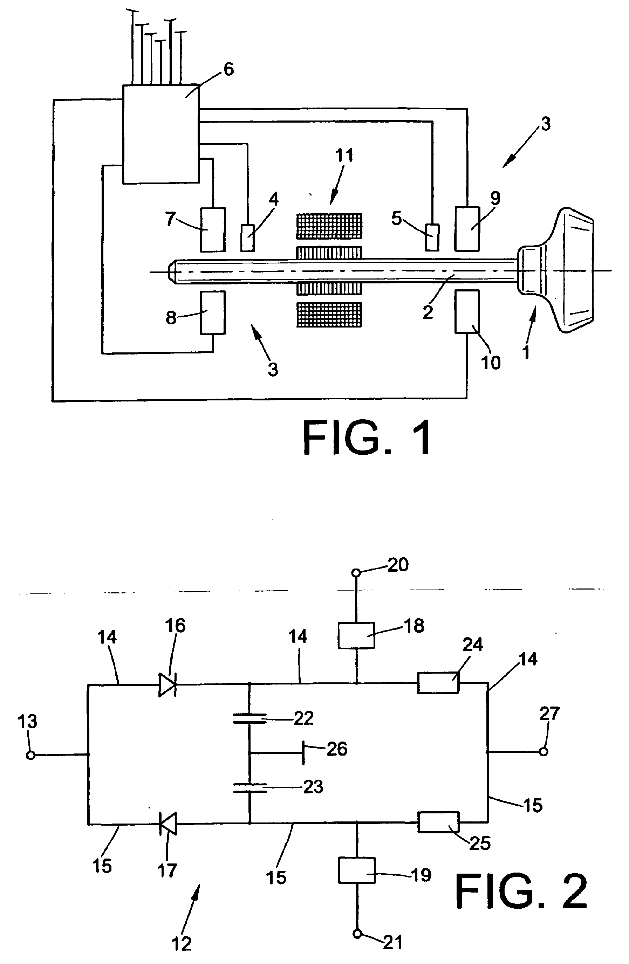

Der in Figur 1 dargestellte Spinnrotor 1 wird am Rotorschaft 2 von einer Magnetlagerung 3 gehaltert. Die Lage des Rotorschaftes 2 wird von einer Sensoren 4, 5 aufweisenden Sensoreinrichtung in an sich bekannter Weise detektiert. Die Sensoreinrichtung erzeugt fortlaufend Detektorsignale, mit der die Steuereinrichtung 6 gespeist wird, die ihrerseits die entsprechenden Aktorsignale ausgibt. Den Sensoren 4, 5 zugeordnete Aktorelemente 7, 8, 9, 10 weisen Magnetspulen auf und dienen der Einhaltung der gewünschten Lage des Spinnrotors 1. Die Antriebseinrichtung 11 erteilt dem Spinnrotor 1 eine Drehbewegung. Die Aktoreinrichtung wird zur Betätigung der Aktorelemente 7, 8, 9, 10 von der Steuereinrichtung 6 jeweils mit einer Steuerspannung U_{ST} beaufschlagt. Weitere entsprechend wirkende, aus Vereinfachungsgründen nicht dargestellte Sensoren und Aktorelemente sind um 90° in Drehrichtung des Spinnrotors 1 zu den Sensoren 4, 5 und den Aktorelementen 7, 8, 9, 10 versetzt angeordnet. Für diese Aktorelemente wird die Aktoreinrichtung ebenfalls in der vorbeschriebenen Weise von der Steuereinrichtung 6 jeweils mit einem Aktorsteuersignal in Form einer Steuerspannung U_{ST} beaufschlagt.

Zum Generieren der jeweiligen Steuerspannung U_{ST} umfaßt die Steuereinrichtung 6 eine Regeleinrichtung mit weitestgehendem D-Anteil sowie eine im Strompfad zur Aktoreinrichtung beziehungsweise zu den jeweiligen Aktorelementen 7, 8, 9, 10 auf die Regeleinrichtung nachfolgende, in Figur 2 dargestellte Schaltung 12.

Am Spannungseingang 13 der Schaltung 12 liegt als Reglerausgangssignal der PD-Regeleinrichtung die Spannung U_{E} an. Vom Spannungseingang 13 gehen zwei parallel verlaufende Strompfade 14, 15 aus. Die im Verlauf des Strompfades 14 angeordnete Diode 16 läßt Strom durch, wenn am Spannungseingang 13 eine gegenüber dem Momentanwert am Kondensator 22 positive Spannung U_{E} anliegt. Die Diode 16 wirkt wie ein Schalter. An den Ausgang der Diode 16 ist eine Konstantstromquelle 18 angeschlossen, wobei die Konstantstromquelle 18 mit einer konstanten negativen Spannungsquelle 20 verbunden ist. Die Spannungsquelle 20 des Ausführungsbeispieles der Figur 2 liefert eine Spannung von zum Beispiel minus 10 Volt. Die Konstantstromquelle 18 umfaßt in an sich bekannter Weise einen Transistor, dessen Basis von einer im Beispiel konstanten Spannung gespeist wird, und einen Emitterwiderstand. Zwischen dem Ausgang der Diode 16 und Masse 26 ist ein Kondensator 22 und zwischen dem Ausgang der Diode 16 und dem Spannungsausgang 27 ist ein Widerstand 24 angeordnet.

Der Strompfad 15 ist quasisymmetrisch zum Strompfad 14 ausgebildet. Die Diode 17 läßt Strom durch, wenn am Spannungseingang 13 eine gegenüber dem Momentanwert am Kondensator 22 negative Spannung U_{E} anliegt. An den Ausgang der Diode 17 ist eine Konstantstromquelle 19 angeschlossen, wobei die Konstantstromquelle 19 mit einer konstanten positiven Spannungsquelle 21 verbunden ist. Die Spannungsquelle 21 liefert eine Spannung von zum Beispiel plus 10 Volt. Zwischen dem Ausgang der Diode 17 und Masse 26 ist ein Kondensator 23 und zwischen Ausgang der Diode 17 und dem Spannungsausgang 27 ist ein Widerstand 25 angeordnet.

Der Schwellwert der Dioden 16, 17 beträgt im Ausführungsbeispiel zirka 0,6 Volt. Die Kondensatoren 22, 23 und die Widerstände 24, 25 sind jeweils entsprechend gleich groß ausgelegt. Dabei sind die Widerstände 24, 25 so bemessen, daß die in dem jeweiligen Widerstand 24, 25 fließenden Ströme deutlich kleiner sind als die in den zugeordneten Konstantstromquellen 18, 19 fließenden Ströme.

In einer nicht dargestellten alternativen Ausführung der Schaltung können die Konstantstromquellen 18, 19 zur Vereinfachung lediglich als Widerstände ausgebildet sein.

Die Wirkungsweise der Schaltung 12 wird nachfolgend erläutert. Ein Reglerausgangssignal der PD-Regeleinrichtung der Steuereinrichtung 6, das durch eine positive Spannung repräsentiert wird, führt über den Spannungseingang 13 und über die Diode 16 zu einer Beaufschlagung des Kondensators 22 mit einer positiven Spannung. Ein Reglerausgangssignal, das dagegen negativ ist, führt über die Diode 17 zu einer Beaufschlagung des Kondensators 23 mit einer negativen Spannung. Bedingt durch die Einspeisung von konstanten Strömen aus den Konstantstromquellen 18, 19 entspricht die Kondensatorspannung am Kondensator 22 der Spannung U_{E} minus der Schwellenspannung der Diode 16. Analog dazu entspricht die Kondensatorspannung am Kondensator 23 der Spannung U_{E} plus der Schwellenspannung der Diode 17. Über die als Spannungsteiler wirkenden Widerstände 24, 25 stellt sich am Spannungsausgang 27 als Ausgangsspannung U_{A} wieder eine Spannung in gleicher Höhe wie die Spannung U_{E} ein, d.h. ist die Spannung U_{E} eine Wechselspannung mit niedriger Frequenz und niedriger Amplitude, bleiben die Spannung U_{E} und die Spannung U_{A} weiterhin im wesentlichen gleich.

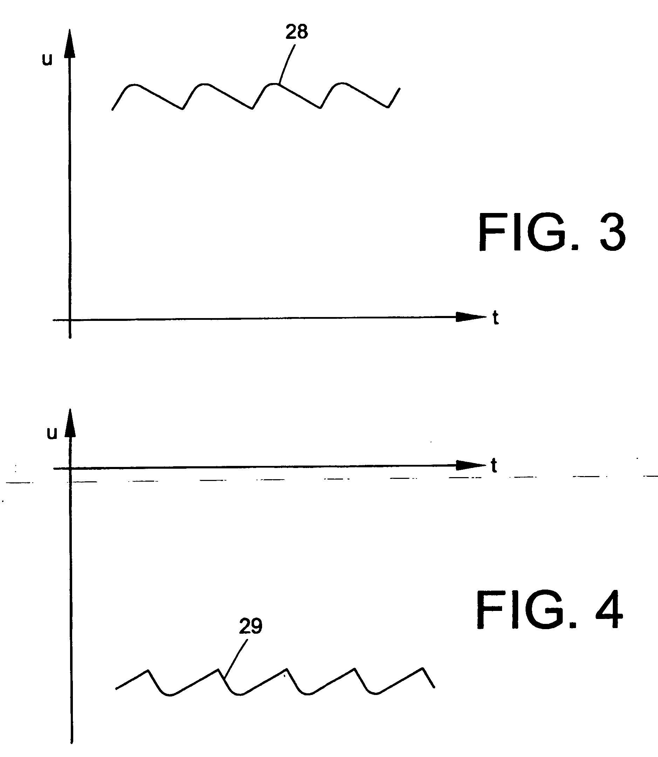

Überschreitet, abhängig von Frequenz und Amplitude, die Steigung der die Rotorlage beziehungsweise die Reglerausgangssignale repräsentierenden Schwingung einen bestimmten Wert, der als maximaler Betrag vorgegeben ist, entspricht der als Kurve dargestellte Verlauf der am Kondensator 22 anliegenden Spannung 28 der Prinzipdarstellung der Figur 3 und der als Kurve dargestellte Verlauf der am Kondensator 23 anliegenden Spannung 29 der Prinzipdarstellung der Figur 4. Dadurch stellt sich am Spannungsausgang 27 für die Spannung U_{A} eine wesentlich kleinere Amplitude ein als für die Spannung U_{E}. Dieser Spannungsverlauf an den Kondensatoren 22, 23 tritt dann auf, wenn die Steigung dU/dt der als Kurve über eine Zeitachse dargestellten Spannung am Spannungseingang 13 größer als die Steigung des als Kurve dargestellten Spannungsverlaufes an den Kondensatoren 22, 23 ist. Der Betrag der Steigung des als Kurve dargestellten Spannungsverlaufes an den Kondensatoren 22, 23 und damit der maximale Betrag der jeweiligen positiven oder negativen Steigung ist durch die Höhe des von den Konstantstromquellen 18, 19 aufrechterhaltenen Stromflusses und von dem Kapazitätswert der Kondensatoren 22, 23 bestimmt. Aus dieser Spannung wird das Aktorsteuersignal hergeleitet. Beispielsweise kann die Drehfrequenz des Spinnrotors 1 bei 2 kHz und die Drehzahl des Spinnrotors 1 bei 120 000 U/min liegen.

Wird der Spannungseingang 13 zusätzlich mit einer als Wechselspannung niedriger Frequenz ausgebildeten Spannung U_{E}' beaufschlagt beziehungsweise überlagert, liegt diese Wechselspannung niedriger Frequenz im Gegensatz zu der aus hochfrequenten Signalen abgeleiteten Wechselspannung weitgehend unverändert am Spannungsausgang 27 an. Eine langsame Nutationsbewegung des Spinnrotors 1, die beispielsweise als niederfrequente Schwingung durch die Auswertung der Rotorlagesignale erfasst wird, läßt sich somit optimal dämpfen. Der für die Lageregelung des Spinnrotors 1 erforderliche Energieaufwand wird niedrig gehalten und einer Überbelastung der Aktorelemente 7, 8, 9, 10 und der die Aktoren speisenden Verstärker vorgebeugt.

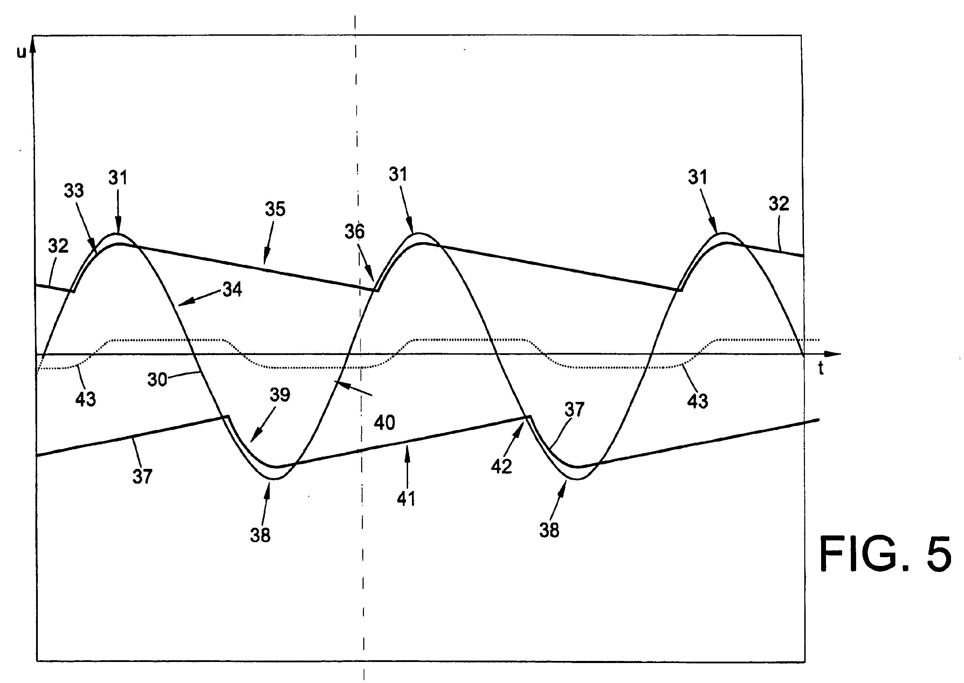

Fig. 5 zeigt beispielhaft einen Abschnitt einer Kurve, die das Reglerausgangssignal 30 als Spannungsverlauf in Form einer Schwingung darstellt, wobei der Verlauf dieser Schwingung von der Rotordrehzahl und von der Lage des Spinnrotors 1 abhängig ist und Reglerausgangssignale repräsentiert. Im Bereich der Amplitudenmaxima 31 wird auf erfindungsgemäße Weise ein erstes weiteres Signal 32 aus der am Kondensator 22 anliegenden Spannung hergeleitet. In einem ersten Abschnitt folgt die Kurve des ersten weiteren Signals 32 weitgehend in ihrem Anstiegsbereich 33 dem Verlauf der Kurve des Reglerausgangssignals 30 bis zum Amplitudenmaximum 31. Überschreitet die Steigung der Kurve des Reglerausgangssignals 30 dagegen im abfallenden Bereich 34 nach dem Amplitudenmaximum 31 beziehungsweise die dort negative Steigung einen vorbestimmten Wert, verläuft die Kurvendarstellung des ersten weiteren Signals 32 in ihrem abfallenden Bereich 35 als Gerade mit einer Steigung beziehungsweise einem Gefälle, die diesem vorbestimmten Wert entspricht. Die Kurvendarstellung des ersten weiteren Signals 32 repräsentiert in ihrem abfallenden, geradlinig verlaufenden Bereich 35 die Entladung des Kondensators 22. Kreuzt die Kurve des Reglerausgangssignals 30 im Schnittpunkt 36 die Kurve des ersten weiteren Signals 32, d.h. übersteigt die durch die Kurve des Reglerausgangssignals 30 repräsentierte Spannung U_{E} die Spannung des Kondensators 22, wird der Entladevorgang des Kondensators 22 beendet und der Kondensator 22 wieder aufgeladen. Entsprechend folgt die Kurve des ersten weiteren Signals 32 ab dem Schnittpunkt 36 wieder weitgehend dem Verlauf der Kurve des Reglerausgangssignals 30, und es beginnt ein neuer Zyklus.

Ein zweites weiteres Signals 37 wird im Bereich der Amplitudenminima 38 gebildet. Die Kurve des zweiten weiteren Signals 37 folgt in einem ersten Bereich 39, in dem sie abfällt beziehungsweise die Steigung negativ ist, weitgehend dem Verlauf der Kurve des Reglerausgangssignals 30 bis zum Amplitudenminimum 38. Überschreitet dagegen die Steigung der Kurve des Reglerausgangssignals 30 nach dem Amplitudenminimum 38 im Bereich 40 einen vorbestimmten Betrag, verläuft die Kurve des zweiten weiteren Signals 37 in ihrem ansteigenden Bereich 41 als Gerade mit einer Steigung, die diesem vorbestimmten Betrag entspricht.

Die Kurvendarstellung des zweiten weiteren Signals 37 repräsentiert in ihrem ansteigenden, geradlinig verlaufenden Bereich 41 eine Entladung des Kondensators 23. Kreuzt die Kurve des zweiten weiteren Signals 37 die Kurve des Reglerausgangssignals 30 im Schnittpunkt 42 , folgt entsprechend die Kurve des zweiten weiteren Signals 37 ab dem Schnittpunkt 42 wieder weitgehend dem Verlauf der Kurve des Reglerausgangssignals 30, und es beginnt ein neuer Zyklus.

Die leichte Differenz zwischen dem Verlauf der Kurve des Reglerausgangssignals 30 und des ersten weiteren Signals 32 im Bereich der Amplitudenmaxima 31 beziehungsweise des zweiten weiteren Signals 37 im Bereich der Amplitudenminima 38 resultiert aus den Diodenschwellwerten der Dioden 16,17. Diese leichte Differenz ist vernachlässigbar klein.

Jedes der beiden weiteren Signale 32, 37 könnte jeweils allein zur Lageregelung beziehungsweise zur Dämpfung herangezogen werden. Wird jedoch, wie oben dargestellt, aus den beiden weiteren Signalen 32,37 ein arithmetischer Mittelwert als neues Signal 43 gebildet, kann die Amplitude des neuen Signals 43 im Vergleich zu den Amplituden der beiden weiteren Signale 32,37 verkleinert und der Kurvenverlauf des neuen Signals 43 geglättet werden. Mit einer Glättung des Kurvenverlaufes des neuen Signals 43 läßt sich eine weitere Energieeinsparung erzielen.

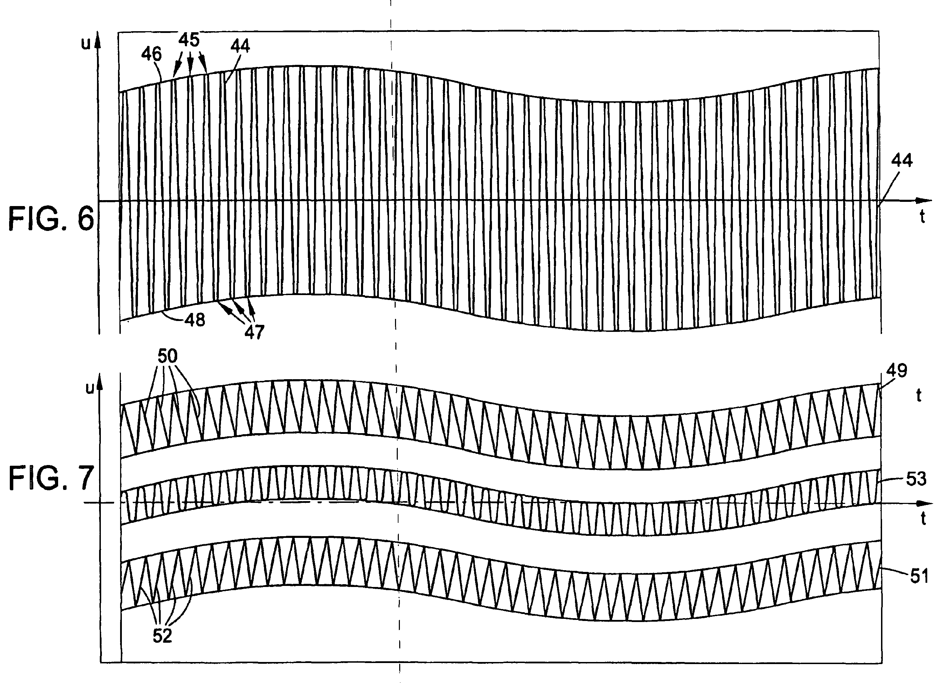

Wie Fig. 5 zeigt auch die Fig. 6 mit Kurve 44 einen Spannungsverlauf in Form einer Schwingung, wobei auch hier der Verlauf dieser Schwingung von der Rotordrehzahl und von der Lage des Spinnrotors 1 abhängig ist und Reglerausgangssignale repräsentiert. In der Darstellung der Fig. 6 ist der hochfrequenten rotordrehzahlabhängigen Schwingung eine niederfrequente Schwingung überlagert, wie sie beispielsweise durch eine relativ langsame Nutationsbewegung des Spinnrotors 1 hervorgerufen wird. Der Verlauf der niederfrequenten Schwingung ist leicht erkennbar und durch den Verlauf der Linie 46, die die Amplitudenmaxima 45 tangiert, und den Verlauf der Linie 48, die die Amplitudenminima 47 tangiert, verdeutlicht.

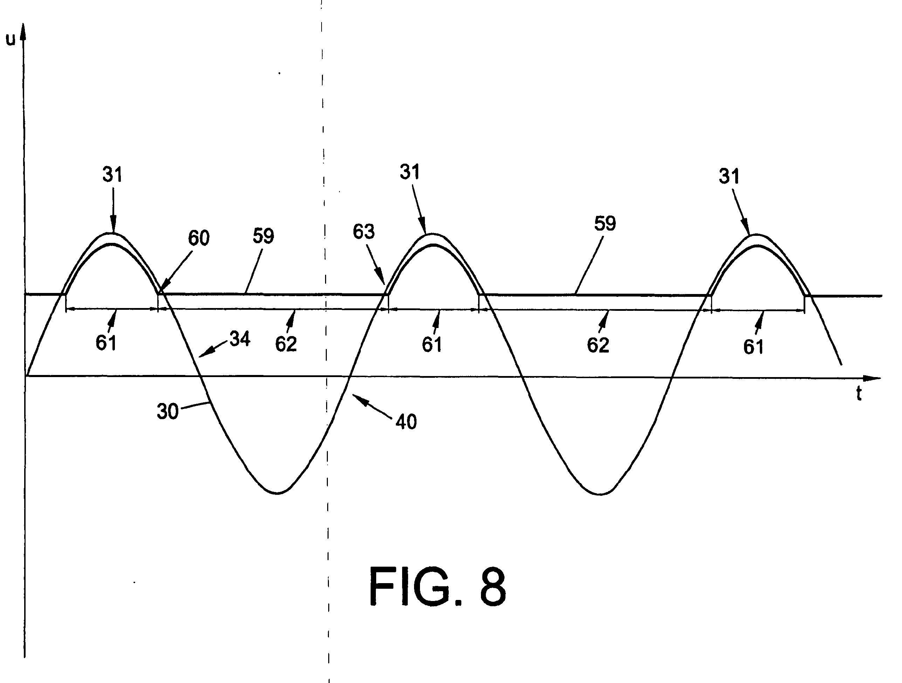

Auf gleiche Weise wie anhand der Fig. 5 erläutert, bildet sich bei einer Begrenzung der Steigung aus dem Kurvenverlauf der Kurve 44 in den abfallenden Bereichen 50 jeweils im Anschluß an die Amplitudenmaxima 45 das neue Signal 49 mit dem in Fig. 7 gezeigten Kurvenverlauf aus. Entsprechend bildet sich der Kurvenverlauf des neuen Signals 51 bei einer Begrenzung der Steigung aus dem Kurvenverlauf der Kurve 44 in den ansteigenden Bereichen 52 jeweils im Anschluß an die Amplitudenminima 47 aus.

In der vereinfachten Darstellung der Fig. 7 sind die Amplitudenmaxima des Kurvenverlaufs des weiteren Signals 49 und die Amplitudenminima des Kurvenverlaufs des weiteren Signals 51 als Spitzen dargestellt. Tatsächlich verlaufen die Amplitudenmaxima des Kurvenverlaufs des weiteren Signals 49 und die Amplitudenminima des Kurvenverlaufs des weiteren Signals 51 nicht in Form einer Spitze, sondern abgerundet wie die Amplitudenmaxima 45 und die Amplitudenminima 47 der Kurve 44.

Werden beide weiteren Signale 49,51 zusammengeführt und daraus ein arithmetischer Mittelwert gebildet, entsteht das neue Signal 53, aus dem die Stellgröße hergeleitet wird. Die Bildung des idealisiert dargestellten neuen Signals 53 kann mit Hilfe von Spannungsteilern beziehungsweise Widerständen oder durch einen Rechner erfolgen.

Mit dem Kurvenverlauf neuen Signals 53 wird die gleiche niederfrequente Schwingung abgebildet wie mit der Kurve 44. Nur ist die Amplitude des Kurvenverlaufs des neuen Signals 53 deutlich kleiner als die Amplitude der Kurve 44. Damit ist das neue Signal 53 wesentlich geeigneter als Stellgröße für die Lageregelung als die Reglerausgangssignale, aus denen die Kurve 44 hergeleitet ist. Die Absenkung der Amplituden erfolgt bei relativ kleinem Phasenfehler beziehungweise einem Phasenfehler, der nahe Null liegt und tolerierbar ist.

Die im Hinblick auf die Rotordrehzahlen flexibel ausgebildete Schaltung 12 erlaubt es, auf einfache und energiesparende Weise eine wirkungsvolle Lageregelung beziehungsweise eine wirkungsvolle Dämpfung durchzuführen.

Fig. 8 zeigt wie die Fig. 5 das Reglerausgangssignal 30 als Kurve dargestellt. Das weitere Signal 59 folgt der Kurve des Reglerausgangssignals 30 bis zum Punkt 60. Zwischen dem Punkt 60 und dem Punkt 63 ist die Steigung des weiteren Signals 59 im Abschnitt 62 Null. Die Kurve des weiteren Signals 59 folgt ab dem Punkt 63 wieder der Kurve des Reglerausgangssignals 30 im Bereich des Amplitudenmaximums 31, und es beginnt ein neuer Zyklus. Das weitere Signal 59 wird mittels eines Prozessors, der Bestandteil der Steuereinrichtung 6 ist, aus den Reglerausgangssignalen 30 generiert. Die jeweilige Lage des Punktes 60 und des Punktes 63 innerhalb der Zyklen wird frequenzabhängig bestimmt. Ein dem weiteren Signal 59 entsprechendes Signal kann auch unter Einbeziehung der Amplitudenminima 38 anstelle der Amplitudenmaxima 31 generiert werden.

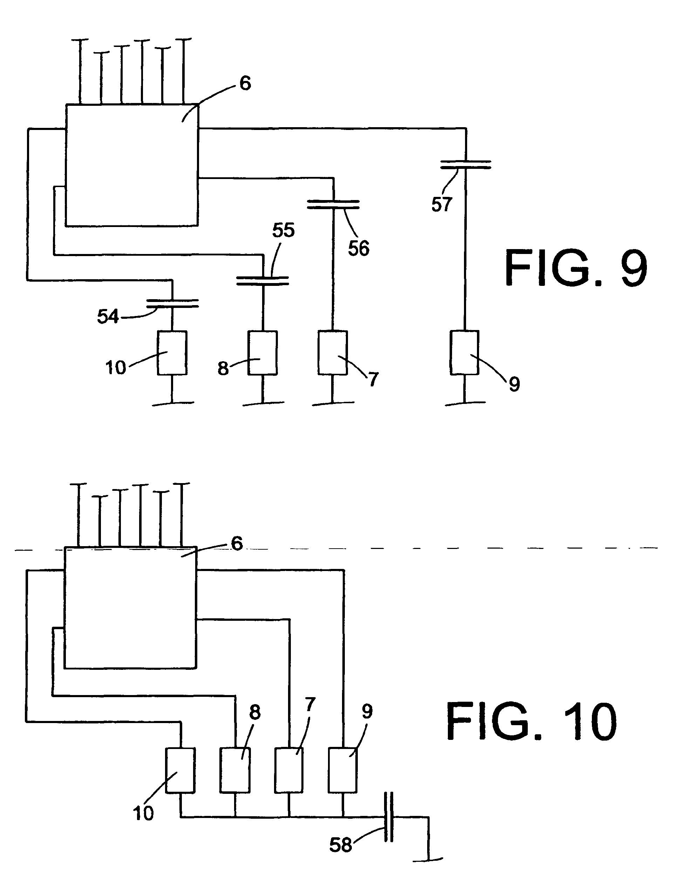

Die Fig. 9 und 10 zeigen Ausbildungen, bei denen der Steuereinrichtung 6 mindestens ein Kondensator 54, 55, 56 57, 58 nachgeordnet ist. Mit einem der Steuereinrichtung 6 nachgeschalteten Kondensator wird der Gleichstromanteil des Signals abgekoppelt. Fig. 9 zeigt jeweils einen Kondensator 54, 55, 56, 57, der in Reihe mit den Aktoren 7, 8, 9, 10 geschaltet und zwischen der Steuereinrichtung 6 und den Aktoren 7, 8, 9, 10 angeordnet ist. Der jeweilige Kondensator kann auch in einer nicht dargestellten Ausführungsform innerhalb der Steuereinrichtung 6 angeordnet sein.

Fig. 10 zeigt eine weitere Ausführungsform, bei der ein einzelner Kondensator 58 den Aktoren 7, 8, 9, 10 gemeinsam nachgeordnet ist. Die Abkopplung des Gleichstromanteils insbesondere bei unsymmetrischem Kurvenverlauf des Signals führt zu einer Verlagerung des Mittelwertes des Signals zum Nullpunkt. Durch die Abkopplung des Gleichstromanteils werden die Aktoren 7, 8, 9, 10 entlastet.

## Patentansprüche

1. Vorrichtung zur radialen Lageregelung eines berührungslos gelagerten schnelldrehenden Rotors (1), insbesondere eines Spinnrotors, die eine Sensoreinrichtung (4,5) zur fortlaufenden Erzeugung von Rotorlagesignalen und eine die Rotorlagesignale verarbeitende Steuereinrichtung (6) besitzt, wobei die Steuereinrichtung einen Regler umfaßt, der ein aus den Rotorlagesignalen generiertes drehfrequenzabhängiges Ausgangssignal ausgibt, welches für die Steuerung der Aktoreinrichtung (7,8,9,10) verwendet wird,
**dadurch gekennzeichnet,**
**daß** die Steuereinrichtung (6) zur Bildung eines weiteren Signals (32,49;37,51;59) eingerichtet ist, das der Generierung des Aktorsteuersignals dient, das bei Rotordrehfrequenzen unterhalb und im Bereich der Resonanzfrequenzen der berührungslosen Lagerung dem drehfrequenten Kurvenverlauf des Reglerausgangssignals (30,44) folgt und das oberhalb dieser Resonanzfrequenzen zunehmend dem drehfrequenten Kurvenverlauf des Reglerausgangssignals (30,44) jeweils nur noch im Bereich mindestens eines der beiden Extremwerte (31,45;38,47) folgt, wodurch die Amplitude des weiteren Signals (32,49;37,51;59) deutlich geringer ist als die Amplitude des drehfrequenzabhängigen Reglerausgangssignals (30,44) und daß das weitere Signal (32,49;37,51;59) der drehfrequenzabhängigen Schwingung überlagerte, demgegenüber niederfrequente Schwingungen des Reglerausgangssignals (30,44) praktisch unverändert abbildet.

2. Vorrichtung nach Anspruch 1, **dadurch gekennzeichnet, daß** die Steuereinrichtung (6) so eingerichtet ist, daß die Reduzierung der Amplitude der drehfrequenzabhängigen Schwingung des weiteren Signals (32,49;37,51;59) gegenüber der Amplitude der drehfrequenzabhängigen Schwingung des Reglerausgangssignals (30,44) **dadurch** bewirkt wird, daß außerhalb der Bereiche, in denen das weitere Signal (32,49;37,51;59) dem Kurvenverlauf des Reglerausgangssignals (30,44) folgt, der Betrag der Steigung der Kurve des weiteren Signals (32,49;37,51;59) auf einen maximalen Betrag begrenzt wird.

3. Vorrichtung nach Anspruch 2, **dadurch gekennzeichnet, daß** der Abschnitt, in dem die Begrenzung der Steigung.der Kurve des weiteren Signals (32,49;37,51;59) auf einen maximalen Betrag wirksam ist, beim
Extremwert (31,45;38,47) beginnt und dann endet, wenn der Wert des Reglerausgangssignals (30,44) den momentanen Wert des weiteren Signals (32,49;37,51;59) wieder erreicht.

4. Vorrichtung nach Anspruch 2, **dadurch gekennzeichnet, daß** die Steuereinrichtung (6) so eingerichtet ist, daß die Breite des jeweiligen Bereiches, in dem das weitere Signal (32,49;37,51;59) dem Kurvenverlauf des Reglerausgangssignals (30,44) folgt, drehfrequenzabhängig bestimmt wird und außerhalb dieser Bereiche die Steigung der Kurve des weiteren Signals (32,49;37,51;59) Null ist.

5. Vorrichtung nach einem der vorhergehenden Ansprüche, **dadurch gekennzeichnet, daß** der Steuereinrichtung (6) mindestens ein Kondensator (54) nachgeschaltet ist.

6. Vorrichtung nach einem der vorhergehenden Ansprüche, **dadurch gekennzeichnet, daß** die Drehfrequenz, bei der der Kurvenverlauf des weiteren Signals (32,49;37,51;59) dem Kurvenverlauf des Reglerausgangssignals (30,44) nur im Bereich eines der beiden Extremwerte (31,45;38,47) folgt, mindestens doppelt so hoch ist wie die maßgebende Resonanzfrequenz der'berührungslosen Lagerung.

7. Vorrichtung nach einem der Ansprüche 1 bis 3, **dadurch gekennzeichnet, daß** die Steuereinrichtung (6) zur Bildung eines neuen Signals (43,53) als arithmetischer Mittelwert zweier weiterer Signale (37,51;32,49) eingerichtet ist, wobei dem Kurvenverlauf des Reglerausgangssignals (30,44) ein weiteres Signal (37,51) jeweils nur im Bereich eines der beiden Extremwerte (38,47) und das andere weitere Signal (32,49) nur im Bereich der jeweils anderen Extremwerte (31,45) folgt, und das als Mittelwert gebildete neue Signal (43,53) als Aktorsteuersignal zur Ausgabe an die Aktoreinrichtung gelangt.

8. Vorrichtung nach einem der vorhergehenden Ansprüche, **dadurch gekennzeichnet, daß** die Steuereinrichtung (6) eine quasisymmetrische Schaltung (12) zur Bildung des neuen Signals (43,53) aufweist.

9. Vorrichtung nach Anspruch 8, **dadurch gekennzeichnet, daß** die quasisymmetrische Schaltung (12) in jedem Zweig mindestens eine Diode (16, 17), einen Kondensator (22, 23), durch dessen Kapazität der maximale Betrag der Steigung für den Bereich bestimmt wird, in dem die Begrenzung wirksam ist, eine Konstantstromquelle (18, 19) und einen Widerstand (24, 25) aufweist.

10. Vorrichtung nach Anspruch 9, **dadurch gekennzeichnet, daß** die Schaltung (12) derart aufgebaut ist, daß zwischen einem Spannungseingang (13) und einem Spannungsausgang (27) der Schaltung (12) zwei parallele Strompfade (14, 15) verlaufen, daß der erste Strompfad (14) und der zweite Strompfad (15) jeweils über eine Diode (16, 17) führen, wobei die Diode (16) des ersten Strompfades (14) Strom durchläßt, wenn am Spannungseingang (13) und damit am Eingang der Diode (16) eine positive Spannung anliegt, und die Diode (17) des zweiten Strompfades (15) Strom durchläßt, wenn am Spannungseingang (13) eine negative Spannung anliegt, daß am Ausgang der Dioden (16, 17) jeweils eine Konstantstromquelle (18, 19) angeschlossen ist, wobei die Konstantstromquellen (18, 19)' so ausgelegt sind, daß die Konstantstromquelle (18) des ersten Strompfades (14) einen negativen Strom einspeist und die Konstantstromquelle (19) des zweiten Strompfades (15) einen positiven Strom einspeist, und daß zwischen dem Ausgang der Dioden (16, 17) und Masse (26) jeweils ein Kondensator (22, 23) und zwischen dem Ausgang der Dioden (16, 17) und dem Spannungsausgang (27) jeweils ein Widerstand (24, 25) angeordnet ist.

11. Vorrichtung nach Anspruch 10, **dadurch gekennzeichnet, daß** die Widerstände (24, 25) so ausgelegt sind, daß die in dem jeweiligen Widerstand (24, 25) fließenden Ströme deutlich kleiner sind als die in der zugeordneten Konstantstromquelle (18, 19) fließenden Ströme.

## Claims

1. Device for the radial positioning control of a fast-rotating rotor (1) supported in a contactless manner, in particular a spinning rotor, the device comprising a sensor device (4, 5) for the continuous generation of rotor positioning signals and a control device (6) for processing the rotor position signals, whereby the control device comprises a controller, that outputs a rotary-frequency-dependent output signal, generated from the rotor position signals, which signal is used for controlling the actuator device (7, 8, 9, 10),
**characterised in that**
the control device (6) is set up to form a further signal (32, 49; 37, 51; 59) which is used for generating the actuator control signal which follows the rotary-frequent waveform of the controller output signal (30, 44) at rotary frequencies below and in the region of the resonance frequencies of the contactless support, and which above these resonance frequencies increasingly follows the rotary-frequent waveform of the controller output signal (30, 44) only in the area of at least one of the two extreme values (31, 45; 38, 47), whereby the amplitude of the resultant signal (32, 49; 37, 51; 59) is distinctly smaller than the amplitude of the rotary-frequency-dependent controller output signal (30, 44), and wherein the resultant signal (32, 49; 37, 51; 59) of the rotary-frequency-dependent oscillation maps superposed oscillations of the controller output signal (30, 44) that are low-frequency in comparison to it in a practically unchanged manner.

2. Device according to claim 1, **characterised in that** the control device (6) is set up in such a manner that the reduction of the amplitude of the rotary-frequency-dependent oscillation of the resultant signal (32, 49; 37, 51; 59) relative to the amplitude of the rotary-frequency-dependent oscillation of the controller output signal (30, 44) is effected **in that** the sections outside of the areas in which the resultant signal (32, 49; 37, 51; 59) follows the waveform of the controller output signal (30, 44), the rise of the curve of the resultant signal (32, 49; 37, 51; 59) is limited to a maximum amount.

3. Device according to claim 2, **characterised in that** each section in which the rise of the curve of the resultant signal (32, 49; 37, 51; 59) is limited to a maximum amount begins at a respective extreme value (31, 45; 38, 47) and ends when the value of the controller output signal (30, 44) again attains the instantaneous value of the resultant signal (32, 49; 37, 51; 59).

4. Device according to claim 2, **characterised in that** the control device (6) is set up in such a manner that the width of each respective area in which the resultant signal (32, 49; 37, 51; 59) follows the waveform of the controller output signal (30, 44) is determined as a function of the rotary frequency and that outside of these areas the rise of the curve of the resultant signal (32, 49; 37, 51; 59) is zero.

5. Device according to one of the preceding claims, **characterised in that** at least one capacitor (54) is connected after the control device (6).

6. Device according to one of the preceding claims, **characterised in that** the rotary frequency at which the waveform of the resultant signal (32, 49; 37, 51; 59) follows the waveform of the controller output signal (30, 44) only in the area of one of the two extreme values (31, 45; 38, 47) is at least twice as high as the decisive resonance frequency of the contactless support.

7. Device according to one of claims 1 to 3, **characterised in that** the control device (6) is set up for forming a new signal (43, 53) from the arithmetic average of two resultant signals (37, 51; 32, 49), whereby one resultant signal (37, 51) follows the waveform of the controller output signal (30, 44) only in the area of one of the two extreme values (38, 47) and the other resultant signal (32, 49) follows the waveform of the controller output signal only in the area of the other of the two extreme values (31, 45), and the new signal (43, 53) formed from the arithmetic average is output to the actuating device as the actuating control signal.

8. Device according to one of the preceding claims, **characterised in that** the control device (6) comprises a quasi symmetric circuit (12) for forming the new signal (43, 53).

9. Device according to claim 8, **characterised in that** the quasi symmetric circuit (12) includes in each branch at least one diode (16, 17), a capacitor (22, 23), whose capacitance determines the maximum amount of the rise for the area in which the limitation is effective, a constant current source (18, 19) and a resistor (24, 25).

10. Device according to claim 9, **characterised in that** the circuit (12) is constructed in such a manner that two parallel current paths (14, 15) run between a voltage input (13) and a voltage output (27) of the circuit (12), **in that** the first current path (14) and the second current path (15) each run via a diode (16, 17), whereby the diode (16) of the first current path (14) lets current through if a positive voltage is on the voltage input (13) and thereby on the input of the diode (16), and the diode (17) of the second current path (15) lets current through if a negative voltage is on the voltage input (13), **in that** a constant current source (18, 19) is connected respectively to the output of each diode (16,17), whereby the constant current sources (18, 19) are designed in such a manner that the constant current source (18) of the first current path (14) feeds a negative current, and the constant current source (19) of the second current path (15) feeds a positive current, and **in that** a capacitor (22, 23) is respectively disposed between the output of the diodes (16, 17) and a ground source (26) and a resistor (24, 25) is respectively disposed between the output of the diodes (16, 17) and the voltage output (27).

11. Device according to claim 10, **characterised in that** the resistors (24, 25) are designed in such a manner that the currents flowing in the respective resistor (24, 25) are distinctly smaller than the currents flowing in its associated constant current source (18, 19).

## Revendications

1. Dispositif de régulation de position d'un rotor (1) tournant à grande vitesse, suspendu sans contact, en particulier d'un rotor de filage, qui possède un dispositif capteur (4, 5) pour la génération continue de signaux de position de rotor et un dispositif de commande (6) traitant les signaux de position de rotor, le dispositif de commande comprenant un régulateur qui délivre un signal de sortie dépendant de la fréquence de rotation généré à partir des signaux de position de rotor, lequel est utilisé pour la commande du dispositif actionneur (7, 8,9,10),
**caractérisé par le fait**
**que** le dispositif de commande (6) est conçu pour former un signal supplémentaire (32, 49 ; 37, 51 ; 59) qui sert à la génération du signal de commande des actionneurs qui, aux fréquences de rotation du rotor situées au-dessous et au voisinage des fréquences de résonance de la suspension sans contact, suit l'allure de la courbe à fréquence de rotation du signal de sortie de régulateur (30, 44) et qui, au-dessus de ces fréquences de résonance, suit de plus en plus l'allure de la courbe à fréquence de rotation du signal de sortie de régulateur (30, 44) seulement encore au voisinage d'au moins une des deux valeurs extrêmes (31, 45 ; 38, 47), moyennant quoi l'amplitude du signal supplémentaire (32, 49 ; 37, 51 ; 59) est nettement plus faible que l'amplitude du signal de sortie de régulateur (30, 44) dépendante de la fréquence de rotation, et que le signal supplémentaire (32, 49 ; 37, 51 ; 59) reproduit pratiquement sans changement des oscillations du signal de sortie de régulateur (30, 44) superposées à l'oscillation dépendante de la fréquence de rotation, à basse fréquence par rapport à celle-ci.

2. Dispositif selon la revendication 1, **caractérisé par le fait que** le dispositif de commande (6) est conçu de telle manière que la réduction de l'amplitude de l'oscillation dépendante de la fréquence de rotation du signal supplémentaire (32, 49 ; 37, 51 ; 59) par rapport à l'amplitude de l'oscillation dépendante de la fréquence de rotation du signal de sortie de régulateur (30, 44) soit obtenue **par le fait qu'**en dehors des plages dans lesquelles le signal supplémentaire (32, 49 ; 37, 51 ; 59) suit l'allure de la courbe du signal de sortie de régulateur (30, 44), la valeur de la pente de la courbe du signal supplémentaire (32, 49 ; 37, 51 ; 59) est limitée à une valeur maximale.

3. Dispositif selon la revendication 2, **caractérisé par le fait que** la section dans laquelle la limitation de la pente de la courbe du signal supplémentaire (32, 49 ; 37, 51 ; 59) à une valeur maximale est active commence à la valeur extrême (31, 45 ; 38, 47) et se termine lorsque la valeur du signal de sortie de régulateur (30, 44) atteint de nouveau la valeur momentanée du signal supplémentaire (32, 49 ; 37, 51 ; 59).

4. Dispositif selon la revendication 2, **caractérisé par le fait que** le dispositif de commande (6) est conçu de telle manière que la largeur de la plage respective dans laquelle le signal supplémentaire (32, 49 ; 37, 51 ; 59) suit l'allure de la courbe du signal de sortie de régulateur (30, 44) soit déterminée en fonction de la fréquence de rotation et que la pente de la courbe du signal supplémentaire (32, 49 ; 37, 51 ; 59) soit nulle en dehors de ces plages.

5. Dispositif selon l'une des revendications précédentes, **caractérisé par le fait qu'**au moins un condensateur (54) est placé en aval du dispositif de commande (6).

6. Dispositif selon l'une des revendications précédentes, **caractérisé par le fait que** la fréquence de rotation à laquelle l'allure de la courbe du signal supplémentaire (32, 49 ; 37, 51 ; 59) suit l'allure de la courbe du signal de sortie de régulateur (30, 44) seulement au voisinage d'une des deux valeurs extrêmes (31, 45 ; 38, 47) est au moins deux fois plus élevée que la fréquence de résonance fondamentale de la suspension sans contact.

7. Dispositif selon l'une des revendications 1 à 3, **caractérisé par le fait que** le dispositif de commande (6) est conçu pour former un nouveau signal (43, 53) en tant que moyenne arithmétique de deux signaux supplémentaires (37, 51 ; 32, 49), un signal supplémentaire (37, 51) ne suivant l'allure de la courbe du signal de sortie de régulateur (30, 44) qu'au voisinage d'une des deux valeurs extrêmes (38, 47) et l'autre signal supplémentaire qu'au voisinage de l'autre valeur extrême (31, 45), et que le nouveau signal (43, 53) formé en tant que moyenne est utilisé comme signal de commande des actionneurs destiné à être délivré au dispositif actionneur.

8. Dispositif selon l'une des revendications précédentes, **caractérisé par le fait que** le dispositif de commande (6) présente un circuit (12) quasi-symétrique pour la formation du nouveau signal (43, 53).

9. Dispositif selon la revendication 8, **caractérisé en ce que** le circuit quasi-symétrique (12) présente dans chaque branche au moins une diode (16, 17), un condensateur (22, 23), par la capacité duquel la valeur maximale de l'accroissement est déterminée pour la plage dans laquelle la limitation est efficace, une source de courant constant (18, 19) et une résistance (24, 25).

10. Dispositif selon la revendication 9, **caractérisé en ce que** le circuit (12) est construit de telle manière qu'entre une entrée de tension (13) et une sortie de tension (27) du circuit (12) courent deux chemins ou trajets de courant (14, 15) parallèles, **en ce que** le premier chemin de courant (14) et le deuxième chemin de courant (15) passent chacun par une diode (16, 17), la diode (16) du premier chemin de courant (14) laissant passer du courant lorsqu'une tension positive est appliquée à l'entrée de tension (13) et donc à l'entrée de la diode (16) et la diode (17) du deuxième chemin de courant (15) laissant passer du courant lorsqu'une tension négative est appliquée à l'entrée de tension (13), **en ce qu'**une source de courant constante (18, 19) est connectée à la sortie des diodes (16, 17), les sources de courant constant (18, 19) étant réalisées de telle manière que la source de courant constant (18) du premier chemin de courant (14) injecte un courant négatif et la source de courant constant (19) du deuxième chemin de courant (15) injecte un courant positif, et **en ce qu'**entre la sortie des diodes (16, 17) et la masse (26) est monté à chaque fois un condensateur (22, 23) et entre la sortie des diodes (16,17) et la sortie de tension (27) est montée à chaque fois une résistance (24, 25).

11. Dispositif selon la revendication 10, **caractérisé en ce que** les résistances (24, 25) sont réalisées de telle manière que les courants circulant dans la résistance respective (24, 25) sont nettement plus petits que les courants circulant dans les sources de courant constant (18, 19) correspondantes.
